# EUROPÄISCHE PATENTANMELDUNG

(11) **EP 1 770 590 A2**
(43) Veröffentlichungstag der Anmeldung: **04.04.2007**
(21) Anmeldenummer: 06120180.2
(22) Anmeldetag: 06.09.2006
(51) Int. Cl.: G06F 21/22

(54) **Verfahren und System zum Schutz von Quellcode**

(30) Priorität: 26.09.2005 DE 102005045852
(71) Anmelder: SIEMENS AKTIENGESELLSCHAFT, 80333 München (DE)
(72) Erfinder: Riedl, Wolfgang, 90459, Nürnberg (DE); Strömsdörfer, Christian, 90453, Nürnberg (DE)

(57) **Zusammenfassung**

Die vorliegende Erfindung betrifft ein Verfahren und ein System zum Schutz von Quellcode, insbesondere von Quellcode, der geistiges Eigentum enthält. Verwalteter Quellcode (1), der zu schützen ist, wird in ein Modul abgelenkt, in dem nativer Code (2) für den Quellcode erstellt wird. Des Weiteren werden native Fassaden (3) für alle mit dem Modul referenzierten Module und eine verwaltete Fassade (4) für das Modul mit dem nativen Code (2) erstellt.

## Beschreibung

Die vorliegende Erfindung betrifft ein Verfahren und ein System zum Schutz von Quellcode. Insbesondere betrifft die vorliegende Erfindung das Bereitstellen effektiven Schutzes geistigen Eigentums in Softwareprodukten.

Für Unternehmen, die bedeutende Wettbewerber in einem spezifischen Marktsegment sind, das umfangreiche Softwaresysteme einschließt, ist es von grundlegendem Interesse, das in den Softwaresystemen enthaltene geistige Eigentum zu schützen. Im Allgemeinen enthalten nicht alle Teile einer Softwareumgebung technisches Fachwissen oder Kenntnisse, die einen effektiven Schutz benötigen. Das identische Nachbilden (Reverse Engineering) von Quellcode kann für verschieden Gruppen von Interesse sein, die am Produkt-Lebenszyklus beteiligt sind.

Beispielsweise könnte ein Abnehmer versucht sein das Softwareprodukt nachzubilden, um seine eigenen Modifikationen und Erweiterungen an diesem Produkt zu machen. Dies kann nicht nur zu einer schwierigen Support- Situation führen sondern auch zum Verlust des Abnehmers insgesamt, wenn dieser keine Updates oder neue Versionen des Softwareprodukts mehr benötigt.

Des weiteren kann ein Wettbewerber daran interessiert sein Algorithmen herauszufinden, welche den Anschein haben, in einem seiner Produkte besser zu arbeiten, um diese dann in einem eigenen Produkt zu integrieren und/oder mit eigenen Algorithmen zu kombinieren. Ziel ist dabei meist einen größeren Marktanteil zu erzielen.

Des Weiteren kann ein böswilliger Programmierer (z.B. Hacker) daran interessiert sein mögliche Fehler im Aufbau des Softwareprodukts herauszufinden, um dieses Produkt dann attackieren zu können. Manchmal kann dies auch für einen Wettbewerber von Interesse sein.

Diese Beispiele zeigen, wie wichtig derzeit der Schutz von Know-how in Softwarealgorithmen ist.

Bevor Software mit neuen Technologien entwickelt wurde, erfolgte der Know-how Schutz in Softwareprodukten beiläufig, da herkömmlich verwendete Compiler, wie z.B. C++ Compiler, einen zumindest schwierig lesbaren und optimierten Maschinencode generierten. Damit war das identische Nachbilden von Quellcode nicht profitabel, wodurch sich der Schutz des Quellcodes automatisch ergab.

Üblicherweise werden Softwareprodukte nun jedoch überwiegend mit neuen Technologien, wie z.B. Java und dem .NET Framework, entwickelt und neue verwaltete Umgebungen auf allen wesentlichen Computerplattformen eingesetzt. In einer verwalteten Umgebung werden drei Hauptbereiche, die bisher in jedem Softwaremodul eines Softwareprodukts enthalten waren, durch eine Laufzeitmaschine verwaltet.

Die Speicherverwaltung weist auf Anfrage durch ein Modul Speicher zu und ein so genannter Speicherbereiniger (engl. Garbage Collector) gibt automatisch Speicher frei, der zugewiesen ist aber durch ein Modul nicht erreichbar ist. Dies ist nicht nur sehr effizient, sondern in vielen Fällen sogar schneller als native Mechanismen zur Speicherverwaltung, die beispielsweise in Programmiersprachen wie C und C++ verwendet werden.

Des weiteren enthalten Module des Softwareprodukts keine nativen Maschinencodebefehle sondern einen eher abstrakten Zwischencode. Dieser wird erst beim Laden der Anwendung auf einem Zielsystem in nativen Code umgewandelt, wodurch Eigenschaften des Zielsystems deutlich besser ausgenutzt werden können. So lassen sich beispielsweise unterschiedliche Optimierungen abhängig von der vorhandenen Speichermenge oder anhand der bereits geladenen Module durchführen. Die Laufzeitmaschine überprüft den auszuführenden Code, damit dieser beispielsweise nicht ausgeführt wird, wenn das Ausführen zu einem Absturz oder einer Sicherheitsverletzung führen würde. Die Erstellung nativen, ausführbaren Codes erfolgt mittels eines Just-In-Time (JIT-) Compilers. Ein Just-In-Time Compiler erzeugt zur Laufzeit eines Programms nativen, auf die Basismaschine optimierten Code aus einem beliebigen Zwischencode.

Des Weiteren verwaltet die Laufzeitmaschine Eigenheiten bestimmter Betriebssysteme und/oder Prozessorarchitekturen. Da der native Code erst beim Laden auf einem Zielsystem erstellt wird, enthalten weder der ursprüngliche Quellcode noch der Zwischencode native Maschinencodebefehle, weshalb der native Code Plattform und Prozessor unabhängig ist. Jedoch müssen die Eigenheiten der Betriebssysteme und/oder Prozessorarchitekturen durch die Laufzeitmaschine gehandhabt werden, wodurch diese sowohl Plattform als auch Prozessor abhängig ist.

Die verwalteten Umgebungen werden aufgrund ihrer Vorteile gegenüber herkömmlichen Technologien zukünftig als Hauptentwicklungsplattformen eingesetzt werden.

Beispielsweise ist verwalteter Code, wie z.B. Java oder C# Code, leichter zu schreiben, zu warten und zu verstehen. Des weiteren erfolgt die Speicherverwaltung - wie bereits beschrieben - automatisch. Da sich bei der Entwicklung nativen Codes die meisten Fehler bei der Speicherverwaltung ergeben, bietet die automatische Speicherverwaltung in verwalteten Umgebungen insbesondere Vorteile in Bezug auf die Entwicklungszeit, die Erleichterung des Debuggens (Fehlerbeseitigung im Code), die Wartung und die Sicherheit. Des weiteren sind verwaltete Compilierungseinheiten Plattform und Prozessor unabhängig.

Außerdem lehnen wichtige Unternehmen, die sich mit der Entwicklung von Betriebssystemen befassen, die zukünftige Verwendung von Entwicklungssystemen ab, welche nativen Code erzeugen. Beispielsweise forciert die Firma Microsoft das .NET Framework und Firmen wie z.B. Sun und IBM Java. Dies bedeutet insbesondere, dass Unternehmen, welche Software in Verbindung mit den Betriebssystemen dieser Unternehmen einsetzten, eventuell gezwungen sein werden, diese neuen Technologien (z.B..NET Framework, Java) zumindest für die meisten ihrer Produkte einzusetzen.

Jedoch gehen die Vorteile von Java und .NET Framework mit einem Nachteil einher, insbesondere in Bezug auf den Schutz geistigen Eigentums in Softwareprodukten.

Sowohl Java als auch .NET Code wird nicht zu nativem Maschinencode kompiliert sondern zu einem Assembler ähnlichen Zwischencode, wobei dieser Zwischencode auf deterministischen Wege auf den ursprünglichen Java oder .NET Code abbildet. Er ist daher sehr leicht identisch nachzubilden (Reverse Engineering), wodurch sich beispielsweise geistiges Eigentum nicht effektiv schützen lässt. Es gibt sogar Tools wie "Reflector für .NET" (http://www.aisto.com/roeder/dotnet/), die den zu Grunde liegenden C# oder Visual Basic Code mit einem bloßen Doppelklick wieder herstellen.

Es wurden unterschiedliche Vorschläge gemacht, das Problem des Schutzes von Quellcode zu lösen, jedoch ist keiner der Vorschläge in irgendeiner Weise zufriedenstellend.

Beispielsweise wurde vorgeschlagen, zu schützende Komponenten eines Softwareprodukts in C++ zu codieren und zu Maschinencode zu compilieren. Dabei werden jedoch genau diese Komponenten zu den fehleranfälligsten Modulen, da die bereits beschriebenen Probleme in Bezug auf native Programmierung (z.B. Speicherverwaltung) verbleiben.

Des weiteren wurde vorgeschlagen, den Quellcode der zu schützenden Komponenten zu verschleiern, indem die entsprechenden Bezeichnungen von Assembler-Tokens entfernt und durch Kauderwelsch ersetzt wurden. Dabei verlängern bekannte Verschleierungen lediglich den Reverse Engineering Prozess, wodurch der Quellcode, der beispielsweise geistiges Eigentum darstellt, jedoch nicht effektiv geschützt wird.

Des Weiteren wurde vorgeschlagen den Quellcode der zu schützenden Komponenten zu verschlüsseln, um einen Disassembler (Rückübersetzungsprogramm) fehlzuleiten. Beispielsweise wurde auch vorgeschlagen, ein ganzes Modul, in dem der zu schützende Quellcode enthalten ist, zu verschlüsseln. Problematisch an der Verschlüsselung ist jedoch, dass der Entschlüsselungsalgorithmus zur Laufzeit verfügbar sein muss. Daher ist es nur eine Frage der Zeit, die Mechanismen herauszufinden oder den entschlüsselten Quellcode abzufangen. Insbesondere wird die Entschlüsselung aller zu schützenden Komponenten gelingen, sobald die Entschlüsselung für eine Komponente gelingt.

Des weiteren wurde vorgeschlagen eine Vor-Compilierung eines Moduls durchzuführen, welches den zu schützenden Quellcode enthält. Dabei wird das Modul zu nativem Code vor-compiliert, indem der Modul-Code und alle referenzierten Module zu einer monolitischen, nativen Komponente verbunden werden. Dadurch gehen jedoch beispielsweise die Vorteile einer Java oder .NET Umgebung verloren, da jedes Servicepack oder jede neue Version dazu führen kann, dass der Monolith nicht mehr laufen wird. Des weiteren ist das Modul nach dem Vor-Compilieren keine Java oder .NET Komponente mehr und kann somit nicht von anderen Java oder .NET Komponenten verwendet werden.

Auch der Schutz des geistigen Eigentums durch Patente, Copyright oder Lizenzen ist nicht ausreichend, um das geistige Eigentum beispielsweise vor böswilliger Verwendung zu schützen. Reverse Engineering wird für bestimmte Gruppen immer interessant sein, weshalb technische Lösungen zum Schutz von Know-how unerlässlich sind.

Aufgabe der vorliegenden Erfindung ist es daher gegenüber herkömmlichen Verfahren und Systemen ein effektiveres Verfahren und System zum Schutz von Quellcode bereitzustellen, insbesondere von Quellcode, der geistiges Eigentum enthält.

Diese Aufgabe wird durch ein Verfahren und ein System gemäß den unabhängigen Ansprüchen gelöst. In davon abhängigen Ansprüchen sind vorteilhafte Ausgestaltungen und Weiterbildungen der Erfindung angegeben.

Erfindungsgemäß wird zum Schutz von Quellcode in einem Modul eine native Fassade für mit dem Modul referenzierte Module erstellt. Des weiteren wird für den Quellcode des Moduls ein nativer Code erstellt, der eine Verbindung zu den nativen Fassaden der referenzierten Module herstellt. Dadurch können verwaltete Schnittstellen der referenzierten Module von dem nativen Code aufgerufen werden. Da für den Quellcode des Moduls ein nativer Code erstellt wird, wird das Modul nun zu einer nativen Komponente und enthält nur Maschinencode. Des weiteren wird eine verwaltete Fassade für das Modul erstellt, um es für andere verwaltete Module zugänglich zu machen und seine Metadaten intakt zu halten. Die Metadaten sind insbesondere notwendig, um eine .NET-Laufzeitumgebung zusammenzuhalten. Dieser Schritt sorgt dafür, dass das Modul wie ein verwaltetes Modul aussieht und alle öffentlichen Schnittstellenaufrufe zu dem nativen Code umgeleitet werden, der nach dem vorhergehenden Schritt bereits vorhanden ist.

Im Zusammenhang mit der Erfindung ist der Begriff "Fassade" als eine Art Hülle zu verstehen, welche alle Objekte und Funktionen einer bestimmten Umgebung für eine andere Umgebung mimt. Dadurch werden verwaltete Objekte für native Objekte aufrufbar und anders herum. Alle verwalteten Umgebungen bieten eine Vielfalt von Wegen, solche Fassaden zu erstellen.

Ein effektiver Schutz von Quellcode wird somit durch ein Verfahren erreicht, das im Zusammenhang mit der Erfindung als Ablenkung (engl. "deflection") bezeichnet wird. Dabei wird eine Komponente, welche den zu schützenden Teil des Softwareprodukts in Form von Quellcode enthält, so abgelenkt, dass der Schutz mittels eines nativen Codes erhalten wird und des weiteren alle Vorteile der neuen, eingangs beschriebenen verwalteten Programmierung und Laufzeitumgebungen erhalten bleiben. Da die Komponente, welche den zu schützenden Quellcode umfasst, in eine native Komponente abgelenkt wird, die nur nicht lesbaren Maschinencode enthält, stellt die vorliegende Erfindung einen effektiven Schutz von Quellcode bereit.

Besonders vorteilhaft am erfindungsgemäßen Verfahren ist, dass keine native Programmierung nötig ist, so dass die eingangs beschriebenen Nachteile (z.B. Speicherverwaltung) vermieden werden. Dabei eignet sich das erfindungsgemäße Verfahren insbesondere zum Einsatz in einer verwalteten Umgebung, d.h. die Laufzeitumgebung verwaltet den Speicher für den Entwickler. Der Entwickler muss weder Speicher zuweisen noch diese Speicherzuweisungen wieder aufheben, all dies wird durch die Speicherbereinigung erledigt. Des weiteren kann der Entwickler abhängig von seinen Aufgaben jede beliebige verwaltete Programmiersprache verwenden. Im Allgemeinen kann fast jede Programmiersprache eingesetzt werden, abhängig davon, welche verwaltete Umgebung zum Einsatz kommt.

Ein weiterer Vorteil in Bezug auf das erfindungsgemäße Verfahren besteht darin, dass Reverse Engineering nur sehr schwer oder gar nicht durchführbar ist, da es nicht in deterministischer Weise erfolgt. Im Zusammenhang mit der Erfindung wird von "deterministischem Reverse Engineering" gesprochen, wenn eine eins-zu-eins Abbildung zwischen dem Quellcode und dem compilierten Code vorliegt. Dabei bezieht sich der Begriff "Quell-"Code im Zusammenhang mit der Erfindung nicht auf den exakten Wortlaut der originalen Quellcodedateien sondern eher auf den algorithmischen Aufbau.

In einer Ausgestaltung umfasst das erfindungsgemäße Verfahren den weiteren Schritt des Debuggens, wobei eine Debugging-Information so umgeleitet wird, dass ein Entwickler durch den ursprünglichen Quellcode geleitet wird, wenn er Fehler aus der Komponente beseitigt. Dies ist notwendig, da sich die Debugging-Information des nativen Moduls von der Debugging-Information unterscheidet, die durch einen verwalteten Compiler erstellt worden wäre.

Das erfindungsgemäße Ablenken der Komponente unterscheidet sich von bisher verwendeten Verfahren insbesondere dadurch, dass es auf dem Level der verwendeten Programmiersprache arbeitet. Die bisher verwendeten Verfahren arbeiten auf dem Level einer Zwischensprache, um Quellcode zu schützen. Die bisher verwendeten Verfahren wären nicht in der Lage das erfindungsgemäße Ablenken durchzuführen, da die eingesetzte Komponente, welche verschleiert, verschlüsselt oder ähnliches ist, nicht die durch den Programmierer entwickelte Komponente ist. Vielmehr enthält sie den Zwischencode, wodurch Systemtests sehr riskant und fehleranfällig sein können. Des Weiteren ist mittels der bisher verwendeten Verfahren der Schritt des Debuggens nicht möglich.

Weitere Merkmale und Vorteile der Erfindung ergeben sich aus der folgenden Beschreibung verschiedener, erfindungsgemäßer Ausführungsbeispiele und Ausführungsalternativen im Zusammenhang mit den begleitenden Zeichnungen. Darin zeigen:
Figur 1 die Architektur des erfindungsgemäßen Verfahrens;
Figur 2 wie die verschiedenen Teile der in Figur 1 gezeigten Architektur mittels Standardtools und Einsatz eines Übersetzers erstellt werden; und
Figur 3 die Verwendung einer Zwischensprache bei der Erstellung der in Figur 1 gezeigten Architektur und das Modifizieren einer Debugging-Information gemäß der ursprünglichen Quellcodesprache.

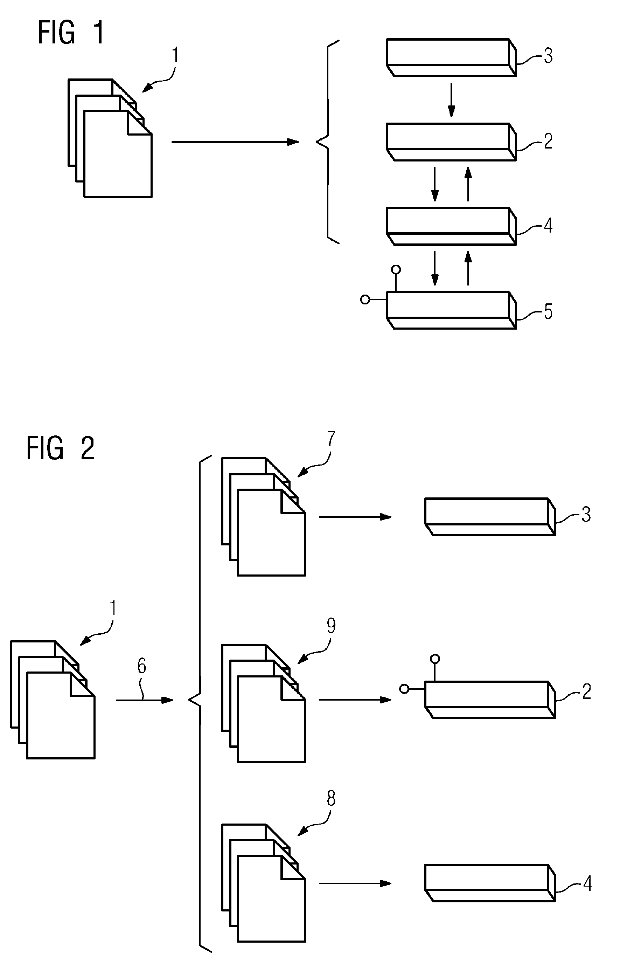

Figur 1 zeigt die Architektur des erfindungsgemäßen Verfahrens. Die Hauptmerkmale der Architektur sind der Schutz von verwaltetem Quellcode 1 durch nativen Code 2 und zwei Fassaden. Die in Figur 1 dargestellte Klammer zeigt an, dass eine native Fassade 3, der native Code 2 und eine verwaltete Fassade 4 in einem Modul zusammengefasst werden. Es ist jedoch auch möglich, dass sich die nativen Fassaden verschiedener Module und die verwaltete Fassade 4 in anderen Modulen als der native Code 2 befinden. Die Frage, wo sich die Fassaden 3, 4 und das native Modul 2 befinden, ist hauptsächlich von den Tools abhängig, welche für das erfindungsgemäße Verfahren eingesetzt werden. Für Java müssen sich die Fassaden in anderen Modulen als der native Code befinden, da Java keine gemischten Module unterstützt. Mit .NET und dem Microsoft C++ Compiler ist es möglich, alle Teile in ein Modul zu stecken. Wenn andere C++ Compiler wie z.B. der GNU oder der Intel C++ Compiler verwendet werden, müssen die Fassaden und der native Code wie in dem Java Modell getrennt werden.

Die zwei Fassaden 3, 4 stellen alles durch das Modul mit nativem Code 2 benötigte bereit, damit dieses als ein verwaltetes Modul erscheint, welches mit anderen verwalteten Modulen 5 kommunizieren kann. Dabei stellt die vorliegende Erfindung einen effektiven Schutz des ursprünglichen Quellcodes 1 bereit, in dem vorzugsweise geistiges Eigentum integriert ist, da der ursprüngliche Quellcode 1 in einen nativen, nicht lesbaren Code abgelenkt wird. Das Ablenken wird in Figur 1 mittels des Pfeils zwischen dem verwalteten Quellcode 1 und dem mittels der Klammer angedeuteten Modul dargestellt. Des weiteren können durch das Erstellen der nativen Fassade 3 für die mit dem Modul referenzierten Module, welches den nativen Code 2 enthält, und das Erstellen der verwalteten Fassade 4 für das Modul alle Vorteile der eingangs erwähnten neuen verwalteten Umgebungen verwendet werden. Diese bringen eine Erleichterung des Codierens und der Fehlerbeseitung, die uneingeschränkte Verwendung der verwalteten Umgebungen und eine nahtlose Integration mit anderen verwalteten Komponenten 5 (abgelenkt oder nicht) mit sich.

Ein compiliertes, abgelenktes Modul ist zwar nicht über Plattformen und Prozessorarchitekturen binär kompatibel, d.h. das Modul muss für jede dieser compiliert werden, jedoch wird nahezu kein Softwareanbieter tatsächlich eine binäre Quelle für mehr als ein Betriebssystem und/oder Prozessorarchitektur anwenden. Des weiteren hat ein compiliertes, abgelenktes Modul gegenüber echten, nativen Komponenten den Vorteil, dass der Quellcode des abgelenkten Moduls völlig Plattform und Prozessor unabhängig ist.

In Bezug auf die vorliegende Erfindung kann ein Entwickler verwaltete Programmiersprachen verwenden, wodurch er von ihrer viel höheren Produktivität und weit weniger Möglichkeiten profitiert, Fehler im Quellcode zu erzeugen. Der einzige Bedarf zu komplexen Programmiersprachen wie z.B. C++ zu wechseln besteht, wenn eine verwaltete Umgebung technisch nicht in der Lage ist, eine bestimmte Aufgabe durchzuführen. Somit bleibt die Auswahl der Entwicklungsumgebung eine rein technische Angelegenheit.

Des Weiteren wird das durch den Entwickler erstellte Modul nicht erneut angefasst. Das heißt, dass Systemprüfer und Abnehmer mit den Modulen arbeiten werden, die tatsächlich entwickelt wurden, und nicht mit irgendeinem verstümmelten Code. Das bedeutet auch, dass das Modul mit dem ursprünglichen Quellcode durch Debuggen von Fehlern bereinigt werden kann.

Das mittels des erfindungsgemäßen Verfahrens erstellte Modul verhält sich wie ein gewöhnliches verwaltetes Modul, obwohl tatsächlich nur die Fassade 4 des Moduls verwaltet wird. Das Innere des Moduls ist dabei nativ und nicht lesbar. Daher verhält es sich entgegen herkömmlicher Verfahren nicht wie irgendein Monolith oder ein statisch verbundenes Modul.

Figur 2 zeigt einen möglichen Prozess, wie die verschiedenen Teile der in Figur 1 gezeigten Architektur zu erstellen sind, die für den Aufbau eines abgelenkten Moduls mittels Standardtools gebraucht werden. Das einzige Stück, das in dieser Toolkette erstellt werden muss ist ein Übersetzer 6. Der Übersetzer 6 erstellt einen gemischten Quellcode 7, 8 für die Fassaden 3, 4 und einen nativen Quellcode 9 für das native Modul 2. Eine Umleitung der Debugging-Information kann durchgeführt werden, indem Standard-Umleitungsmechanismen verwendet werden, die durch gemischte und native Compiler angeboten werden.

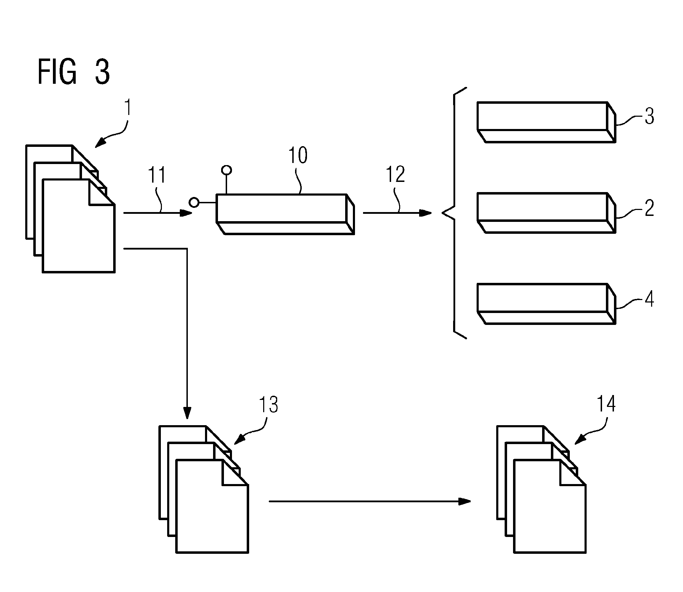

Figur 3 zeigt ein Ausführungsbeispiel, bei dem die zwei Fassaden 3, 4 und der native Code 2 durch Verwenden einer Zwischensprache 10 erfolgt. Ein Framework-Compiler 11 erzeugt aus dem verwalteten Quellcode 1, der in irgendeiner durch das Framework unterstützten Programmiersprache vorliegen kann, die Zwischensprache 10. Diese Zwischensprache 10 wird dann als Input zum Erzeugen der zwei Fassaden 3, 4 und des nativen Codes 2 verwendet, wobei ein erster Compiler 12 den Zwischencode 10 in nativen Code 2 übersetzt. Desweiteren modifiziert ein weiterer Compiler die Debugging-Information 13 gemäß dem originalen Quellcode. Dabei ist die Kenntnis der zu Grunde liegenden Quellcodesprache erforderlich, wenn die Debugging-Information modifiziert wird. Die Debugging-Information 13 wird zu einer umgeleiteten Debugging-Information 14 umgeleitet.

Ein Optimierungsschritt (nicht dargestellt) kann vorgenommen werden, wenn der verwaltete Quellcode des Moduls nativen Code verwendet. Da der verwaltete Quellcode irgendeinen Interop-Mechanismus verwenden muss, kann dieser Umweg in dem finalen nativen Code entfernt werden. "Interop" ist ein .NET Begriff für alle Aufrufe zwischen verwalteten und nativen Komponenten, welche Standardmechanismen verwenden, die in die verwaltete Laufzeit eingebaut sind. Eine "Fassade" ist auch eine Art von Interop-Mechanismus, ist aber eine angepasste und optimierte Lösung, die keine Built-in-Funktionalität verwendet.

Ein noch genauerer Ansatz könnte sein, abgelenkte und nicht abgelenkte Verfahren in einer Komponente zu kombinieren. Dies kann durch zukünftige Erweiterungen der verwalteten Programmiersprachen erreicht werden. Für Sprachen wie C# und C++ bedeutet dies Erweiterungen der ECMA Standards dieser Sprachen. Sprachen wie Visual Basic .NET oder Java müssen gemäß der Prozesse erweitert werden, welche beispielsweise durch die entsprechenden Unternehmen definiert werden.

Da nativer Code möglicherweise eine reichere Funktionalität als verwalteter Code umfasst, können weitere Verbesserungen in die erfindungsgemäße Lösung eingebaut werden. Dies kann beispielsweise zu abgelenkten Modulen führen, welche mindestens so schnell laufen wie gewöhnliche, verwaltete Module und in bestimmten Szenarios werden die abgelenkten Komponenten noch schneller laufen (z.B. wenn der verwaltete Quellcode ausgiebigen Gebrauch von manchen verbliebenen nativen Komponenten macht).

## Patentansprüche

1. Verfahren zum Schutz von Quellcode (1) in einem Modul, umfassend die folgenden Schritte:
- Erstellen einer nativen Fassade (3) für mit dem Modul referenzierte Module;
- Erstellen eines nativen Codes (2), der eine Verbindung zu den nativen Fassaden (3) der referenzierten Module herstellt, für den Quellcode des Moduls, wodurch das Modul eine native Komponente wird; und
- Erstellen einer verwalteten Fassade (4) für das Modul.

2. Verfahren nach Anspruch 1, **gekennzeichnetdurch,** den weiteren Schritt des Debuggens, wobei eine Debugging-Information (13) so umgeleitet wird, dass ein Entwickler durch den ursprünglichen Quellcode (1) geleitet wird.

3. Verfahren nach Anspruch 1 oder 2, **dadurch gekennzeichnet, dass** das Erstellen der nativen Fassade (3), des nativen Codes (2) und der verwalteten Fassade (4) mittels eines Übersetzers (6) erfolgt.

4. Verfahren nach einem der Ansprüche 1 bis 3, **dadurch gekennzeichnet, dass** die native Fassade (3), der native Code (2) und die verwaltete Fassade (4) in einem Modul zusammengefasst werden.

5. Verfahren nach einem der Ansprüche 1 bis 3, **dadurch gekennzeichnet, dass** sich die native Fassaden (3) und die verwaltete Fassade (2) in anderen Modul als der native Code (2) befinden.

6. Verfahren nach einem der Ansprüche 1 bis 5, **dadurch gekennzeichnet, dass** die native Fassade (3), der native Code (2) und die verwaltete Fassade (2) aus einem Zwischencode (10) erstellt werden.

7. Verfahren nach Anspruch 6, **dadurch gekennzeichnet, dass** eine Debugging-Information (13) gemäß der ursprünglichen Quellcodesprache modifiziert wird.

8. Verfahren nach einem der Ansprüche 1 bis 7, **dadurch gekennzeichnet, dass** geistiges Eigentum im Quellcode (1) integriert wird.

9. Verfahren nach einem der Ansprüche 1 bis 8, **dadurch gekennzeichnet, dass** es in einer verwalteten Umgebung eingesetzt wird.

10. System zum Schutz von Quellcode (1) in einem Modul, welches eingerichtet ist, ein Verfahren nach einem der Ansprüche 1 bis 9 durchzuführen.
